# EUROPÄISCHE PATENTSCHRIFT

(11) **EP 4 102 477 B1**
(45) Veröffentlichungstag und Bekanntmachung des Hinweises auf die Patenterteilung: **12.06.2024**
(21) Anmeldenummer: 22177430.0
(22) Anmeldetag: 07.06.2022
(51) Int. Cl.: G08B 13/196, G08B 21/24, G06V 20/52

(54) **VERFAHREN UND VORRICHTUNG ZUR DETEKTION VON MINDESTENS EINEM VON EINER PERSON UNBEAUFSICHTIGTEN OBJEKT, DAS IN EINEM ÜBERWACHUNGSBEREICH ZURÜCKGELASSEN WIRD, BASIEREND AUF EINEM AUFGENOMMENEN BILD DES ÜBERWACHUNGSBEREICHS**
METHOD AND DEVICE FOR DETECTING AT LEAST ONE OBJECT UNSUPERVISED BY A PERSON, SAID OBJECT BEING LEFT IN A SURVEILLANCE AREA BASED ON A RECORDED IMAGE OF THE MONITORED AREA
PROCÉDÉ ET APPAREIL DE DÉTECTION D'AU MOINS UN OBJET SANS SURVEILLANCE D'UNE PERSONNE, LAISSÉ DANS UNE ZONE DE SURVEILLANCE, EN FONCTION D'UNE IMAGE CAPTURÉE DE LA ZONE DE SURVEILLANCE

(30) Priorität: 08.06.2021 DE 102021114642
(43) Veröffentlichungstag der Anmeldung: 14.12.2022
(73) Patentinhaber: IAV GmbH Ingenieurgesellschaft Auto und Verkehr, 10587 Berlin (DE)
(72) Erfinder: Lipka, Pascal, 33428 Harsewinkel (DE); Büthorn, Robert, 10318 Berlin (DE)
(74) Vertreter: Wanzek, Jan

(56) Entgegenhaltungen:
- WO-A1-2020/118430
- US-A1- 2017 076 571
- AMIN FAZAIL ET AL: "A Large Dataset With a New Framework for Abandoned Object Detection in Complex Scenarios", IEEE MULTIMEDIA, IEEE SERVICE CENTER, NEW YORK, NY, US, Bd. 28, Nr. 3, 25. Mai 2021 (2021-05-25), Seiten 75-87, XP011879156, ISSN: 1070-986X, DOI: 10.1109/MMUL.2021.3083701 [gefunden am 2021-09-17]

## Beschreibung

### Technisches Gebiet

Die Erfindung betrifft ein Verfahren zur Detektion von mindestens einem von einer Person unbeaufsichtigten Objekt, das in einem Überwachungsbereich zurückgelassen wird, basierend auf einem aufgenommenen Bild des Überwachungsbereichs gemäß dem Oberbegriff des Anspruchs 1 und eine Vorrichtung zur Detektion von mindestens einem von einer Person unbeaufsichtigten Objekt, das in einem Überwachungsbereich zurückgelassen wird, basierend auf einem aufgenommenen Bild des Überwachungsbereichs gemäß dem Oberbegriff des Anspruchs 5.

### Stand der Technik

Die DE 11 2016 005 965 T5 beschreibt eine Vorrichtung zur Überwachung unbeaufsichtigter Objekte, ein mit derselben versehenes System zur Überwachung unbeaufsichtigter Objekte und ein Verfahren zur Überwachung unbeaufsichtigter Objekte.

Die Vorrichtung zur Überwachung unbeaufsichtigter Objekte, die ein unbeaufsichtigtes

Objekt, das in einem Überwachungsbereich zurückgelassen wird, basierend auf einem aufgenommenen Bild des Überwachungsbereichs, der durch eine Abbildungsvorrichtung abgebildet wird, detektiert und einen Alarm ausgibt, falls das unbeaufsichtigte Objekt detektiert wird, umfasst eine Bildabrufeinheit, die ein aufgenommenes Bild eines durch die Abbildungsvorrichtung abgebildeten Überwachungsbereichs abruft.

Weiterhin umfasst die Vorrichtung eine Objektverfolgungseinheit, die ein Objekt, das im Überwachungsbereich erscheint, aus dem aufgenommenen Bild detektiert und zwischen den aufgenommenen Bildern für jedes detektierte Objekt verfolgt.

Zudem umfasst die Vorrichtung eine Einheit zum Detektieren unbeaufsichtigter Objekte, die ein Objekt, das über eine vorbestimmte Zeit hinaus nicht bewegt wird, basierend auf einem Verfolgungsergebnis für jedes detektierte Objekt durch die Objektverfolgungseinheit als ein unbeaufsichtigtes Objekt detektiert.

Weiterhin umfasst die Vorrichtung eine Einheit zum Bestimmen eines Typs unbeaufsichtigter Objekte, die einen Typ des detektierten unbeaufsichtigten Objekts bestimmt.

Zudem umfasst die Vorrichtung eine Alarmausgabezeitsteuerung, die eine Alarmausgabezeit ab der Detektion eines unbeaufsichtigten Objekts bis zu der Zeit steuert, zu der ein Alarm gemäß dem bestimmten Typ des unbeaufsichtigten Objekts ausgegeben wird.

Sofern eine Besitzerbestimmung eines Objekts lediglich auf einer euklidischen Distanz basiert, kann es leicht zu falschen Objekt-Besitzer-Zuordnungen kommen, insbesondere in Szenarien, in denen mehrere Personen einen gleichen euklidischen Abstand zu einem Objekt haben.

Dies kann vor allem in kleinen Räumen, beispielsweise Shuttles, der Fall sein, sofern mehrere Personen dicht beieinander stehen oder sitzen.

Eine Objekt-Besitzer-Zuordnung auf Basis von Objekt-Positionshistorien kann ebenfalls scheitern.

Insbesondere in Fahrzeuginnenräumen kann es bestimmte Bereiche für Gepäckstücke (Objekte, Gegenstände) geben.

Diese Bereiche können relativ weit entfernt von einer Person sein, die dort etwas platziert hat.

Gleichzeitig kann es einen anderen Passagier geben, der sich über längere Zeit, während der Fahrt, näher an dem platzierten Objekt befindet und dennoch nicht der Besitzer von diesem Objekt ist.

Die DE 10 2012 200 504 A1 beschreibt eine Analyseeinrichtung zur Auswertung einer Überwachungsszene von einem realen Überwachungsbereich, die von mindestens einer Überwachungskamera aufgenommen ist, mit einer Extraktionseinrichtung zur Erkennung von einem quasi-stationären Objekt in der Überwachungsszene und mit einer Erkennungseinrichtung zur Erkennung von bewegten Objekten in der Überwachungsszene. Die Analyseeinrichtung umfasst eine Ausgabeeinrichtung zur Ausgabe einer Objektliste von bewegten Objekten, wobei jedes der bewegten Objekte der Objektliste mindestens eine Raumbedingung erfüllt, wobei die Raumbedingung eine Vorgabe für einen räumlichen Zusammenhang zwischen dem quasi-stationären Objekt und dem bewegten Objekt umfasst. Jedes der bewegten Objekte der Objektliste kann mindestens eine Zeitbedingung erfüllen, wobei die Zeitbedingung eine Vorgabe für ein Zeitfenster für das Auftreten der bewegten Objekte in der Überwachungsszene und/oder in dem Überwachungsbereich umfasst.

Die US 2021 / 0 027 068 A1 beschreibt ein Verfahren zur Videoüberwachung.

Hierbei wird ein Zeitpunkt identifiziert, an welchem ein Objekt verlassen wurde.

In einem Zeitfenster vor und nach diesem Zeitpunkt wird anschließend nach einer Person gesucht, die der mögliche Besitzer des verlassenen Objekts sein könnte.

Die DE 10 2019 134 813 A1 beschreibt ein Verfahren zum Erkennen eines Ereignisses in einer Szene eines räumlichen Bereiches.

Das Verfahren weist ein Auswerten einer Videosequenz auf, welche eine zeitliche Abfolge von Bildern der Szene umfasst.

Das Auswerten der Videosequenz umfasst folgende Schritte:
Identifizieren von einem gegenständlichen Objekt, welches sich in Ruhe befindet, in zumindest zwei aufeinanderfolgenden Bildern der zeitlichen Abfolge von Bildern;
Identifizieren von zumindest einem menschlichen Subjekt in einer Anzahl von vorherigen Bildern, die zeitlich vor den zumindest zwei aufeinanderfolgenden Bildern erfasst wurden;
Verknüpfen des identifizierten gegenständlichen Objekts mit zumindest einem ausgewählten menschlichen Subjekt, ausgewählt von dem identifizierten zumindest einen menschlichen Subjekt, wobei das verknüpfte zumindest eine ausgewählte menschliche Subjekt als Besitzer des identifizierten gegenständlichen Objekts angesehen wird und das identifizierte gegenständliche Objekt als der Besitzgegenstand angesehen wird;
Erkennen in nachfolgenden Bildern, die zeitlich nach den zumindest zwei aufeinanderfolgenden Bildern erfasst wurden, dass sich der Besitzer zu einem Trennungszeitpunkt räumlich von dem Besitzgegenstand entfernt hat;
Bestimmen zumindest einer räumlichen Position des sich entfernten Besitzers in den nachfolgenden Bildern;
Ermitteln einer Zeit-Abstand Charakteristik, welche indikativ ist für zumindest einen Abstand des Besitzers von dem Besitzgegentand als Funktion der Zeit, und wenn der zumindest eine Abstand für eine vorgegebene Mindestzeitspanne seit dem Trennungszeitpunkt größer ist als ein vorgegebener Mindestabstand;
Ausgeben eines Alarmsignals, welches indikativ ist für das erkannte Ereignis.

Amin Fazail et al schlagen ein Framework basierend auf einem Convolution Neural Network für die Lokalisierung von zurückgelassenen Objekten und die Identifizierung des Besitzers in Videoüberwachungssystemen vor ("A Large Dataset With a New Framework for Abandoned Object Detection in Complex Scenarios", IEEE MULTIMEDIA, IEEE SERVICE CENTER, NEW YORK, NY, US, Bd. 28, Nr. 3, 25. Mai 2021 (2021-05-25), Seiten 75-87, XP011879156, ISSN: 1070-986X, DOI: 10.1109/MMUL.2021.3083701 [gefunden am 2021-09-17]). Dabei werden Personen und Objekte in einem aufgenommenen Bild detektiert und über zeitlich vorangegangene Verfahrensschritte verfolgt. Die Zuordnung zwischen einem detektierten Objekt und einer detektierten Person erfolgt anhand einer euklidischen und einer zeitlichen Distanz.

Die US 2017/076571 A1 beschreibt ein Verfahren zum Bereitstellen einer Videozusammenfassung einer Kamera, wobei eine Videokamera selektiv an einen Remote-Server streamen kann. Standbilder oder kurze Videosequenzen werden zeitweise übertragen, wenn keine signifikante Bewegung erkannt wird. Wenn jedoch eine signifikante Bewegung erkannt wird, wird das Video an den Remote-Server gestreamt.

Die WO 2020/118430 A1 offenbart ein Verfahren bzw. eine Vorrichtung für die Erkennung von Objekten und deren Bewegung in Videosignalen. Das Dokument bezieht sich auf allgemeine Hintergrundinformationen über die Bildbearbeitung, z. B. die Erkennung des Auftauchens, des Verschwindens oder der sich ändernden Anzahl von Objekten.

### Aufgabe der Erfindung

Der Erfindung liegt die Aufgabe zugrunde, ein Verfahren und eine Vorrichtung zur Detektion von mindestens einem von einer Person unbeaufsichtigten Objekt, das in einem Überwachungsbereich zurückgelassen wird, basierend auf einem aufgenommenen Bild des Überwachungsbereichs bereitzustellen, welches eine Zuordnung ermöglicht, welches Objekt zu welcher Person gehört.

### Lösung der Aufgabe

Die Aufgabe wird durch ein Verfahren gemäß Anspruch 1 sowie mittels einer Vorrichtung gemäß Anspruch 4 gelöst. ;

### Vorteile der Erfindung

Mittels des erfindungsgemäßen Verfahrens und der erfindungsgemäßen Vorrichtung zur Detektion von mindestens einem von einer Person unbeaufsichtigten Objekt, das in einem Überwachungsbereich zurückgelassen wird, basierend auf mindestens einem aufgenommenen Bild des Überwachungsbereichs, werden in mindestens einem aufgenommenen Bild mindestens eine Person und mindestens ein Objekt jeweils detektiert. Zeitlich anschließend werden die mindestens eine detektierte Person und das mindestens eine detektierte Objekt verfolgt, d.h. es erfolgt ein Tracking der Detektionen.

Zeitlich daran anschließend erfolgt eine Berechnung einer euklidischen Distanz und einer zeitlichen Distanz zwischen mindestens einem detektierten Objekt und mindestens einer detektierten Person, wobei mindestens ein detektiertes Objekt zu mindestens einer detektierten Person anhand der berechneten euklidischen Distanz und zeitlichen Distanz zugeordnet wird.

Zeitlich daran anschließend erfolgt eine Detektion mindestens eines von mindestens einer Person in dem Überwachungsbereich zurückgelassenen Objekts anhand der berechneten euklidischen Distanz und zeitlichen Distanz.

Zeitlich daran anschließend kann ein Alarm ausgegeben werden.

Der Alarm kann auch eine Ausgabe einer Information an die Person umfassen.

Der Alarm kann einen akustischen Signalton/Sprachansage, eine Benachrichtigung (beispielsweise eine sog. push notification) auf ein Smartdevice und/oder einen persönlichen Anruf von einem Operator in einer Zentrale, der dann zum Geschehen geschaltet wird und mit der Person, dessen Objekt im Überwachungsbereich zurückgelassen wurde, telefonieren und das weitere Vorgehen bezüglich des zurückgelassenen Objekts bestimmen kann. Erfindungsgemäß wird nicht nur die euklidische Distanz zwischen einem Objekt (Gegenstand, Gepäck) und im Überwachungsbereich anwesenden Personen zum Detektionszeitpunkt bestimmt, sondern es wird auch die zeitliche Distanz miteinbezogen. Das Hinzuziehen eines weiteren Distanzkriteriums, der Zeit, ermöglicht eine stabilere Zuordnung von Gegenständen zu Besitzern, als wenn diese nur auf Basis der euklidischen Distanz vorgenommen wird.

Erfindungsgemäß können dadurch auch Diebstähle detektiert und ggf. ein Alarm ausgegeben werden, da bekannt ist, welches Objekt zu welcher Person zuzuordnen ist.

Beide Distanzen (euklidische und zeitliche) werden in einem sog. Distanz-Score vereint.

Der Distanz-Score ist die Summe aus dem euklidischen Distanzmaß (eventuell verknüpft mit einem Gewichtungsfaktor) und dem zeitlichen Distanzmaß (eventuell verknüpft mit einem Gewichtungsfaktor).

Die euklidische Distanz kann ausgehend von Mittelpunkten oder anderen Punkten von Hüllkörpern eines Objekts und einer Person bestimmt werden.

Für die zeitliche Distanz-Berechnung wird jeweils der Zeitpunkt gespeichert, an dem ein Objekt bzw. eine Person das erste Mal im Überwachungsbereich registriert wurde.

Die zeitliche Distanz entspricht der Differenz des Registrierungszeitpunktes einer Person und eines Objekts.

Ein Besitzer eines Objekts lässt sich erfindungsgemäß darüber ermitteln, dass er im Vergleich zu allen anderen registrierten Personen im Überwachungsbereich den minimalen Distanz-Score in Bezug auf dieses Objekt aufweist.

In einer vorteilhaften Ausführungsform werden bei der Berechnung der euklidischen Distanz und der zeitlichen Distanz zwischen einem detektierten Objekt und einer detektierten Person die euklidische Distanz und die zeitliche Distanz mit jeweils einem Gewichtungsfaktor verknüpft.

In einer weiteren vorteilhaften Ausführungsform ist das Objekt eine Person oder ein Tier. Mittels eines trainierten künstlichen neuronalen Netzes erfolgt eine Klassenzuordnung über Wahrscheinlichkeiten, d.h. die wahrscheinlichste Klasse wird entsprechend erkannt.

Beispielsweise können Kinder und/oder Tiere an öffentlichen Plätzen im Rahmen von Überwachungssystemen ihren Erziehungsberechtigten bzw. Tierhaltern zugewiesen werden.

Weiterhin kann ein Alarm ausgelöst werden, wenn sich ein Kind bzw. Tier zu weit von seinen Erziehungsberechtigten bzw. Tierhalter entfernt.

Bei der Detektion von mindestens einer Person in mindestens einem aufgenommenen Bild kann ein künstliches neuronales Netz genutzt werden.

Das neuronale Netz kann auch bei gegenseitiger Teilverdeckung von Personen diese separat detektieren, so dass jede Person einen eigenen Hüllkörper erhält.

Redundante Hüllkörper werden am Ende dieses Verfahrensschrittes entfernt.

Bei einer Detektion von mindestens einem Objekt in mindestens einem aufgenommenen Bild kann ebenfalls ein neuronales Netz genutzt werden.

Weiterhin besteht die Möglichkeit zur Detektion von mindestens einem Objekt in mindestens einem aufgenommenen Bild.

Hierfür kann jedes aufgenommene Bild mit digitalen Bildvorverarbeitungsschritten modifiziert werden.

Im Wesentlichen kann dabei eine bildpunktweise Subtraktion der jeweiligen Intensitätswerte des momentanen Bildes mit einem Bild, das den leeren Überwachungsbereich abbildet, stattfinden.

Aus diesem Schritt resultiert ein Bild, das die Differenzen darstellt.

Abgesehen von Rauscheinflüssen zeigt dieses Bild im Wesentlichen Regionen von Bildpunkten von Objekten, die im leeren Überwachungsbereich nicht vorhanden waren. Nachdem die Kanten und Konturen ermittelt sind, werden im nächsten Arbeitsschritt die Hüllkörper berechnet und gespeichert, welche die Konturen einhüllen.

Alle Hüllkörper, deren Schwerpunkte innerhalb der Hüllkörper von Personen liegen, werden anschließend entfernt.

Fehlerhafte Hüllkörper, die durch Bildrauschen oder andere Störeinflüsse entstehen, haben die Eigenschaft, dass sie über eine Bilder-Folge hinweg nur vereinzelt erscheinen. Derartige Hüllkörper werden herausgefiltert, indem nur Hüllkörper für Objekte genutzt werden, die in einer bestimmten Zeitspanne eine bestimmte Anzahl, welche ein definierbarer Schwellenwert sein kann, an Vorkommnissen aufweisen.

Verbleibende Hüllkörper, die sich überlappen, werden in einem weiteren Arbeitsschritt mit größeren Hüllkörpern substituiert, die die jeweils Überlappenden einschließen.

Das Resultat der Phase sind damit Hüllkörper von Objekten, die statisch sind und sich nicht direkt an Personen befinden.

Nur diese haben das Potential, verlassen/vergessen zu werden.

Bei einer Verfolgung (Tracking) der Detektionen können hierbei die resultierenden Hüllkörper der beiden vorigen Verfahrensschritte (Detektion von mindestens einer Person sowie Detektion von mindestens einem Objekt in einem aufgenommenen Bild) einfließen.

Bei einer Verfolgung können den Hüllkörpern in jedem Bild Identifikatoren zugewiesen werden.

In konsekutiven Bildern bleiben die Identifikatoren gleicher Entitäten (Informationsobjekte) unverändert.

Dazu wird bei einer Verfolgung der Flächenschwerpunkt jedes Hüllkörpers berechnet.

Im nächsten Bild werden die darin bestimmten Schwerpunkte mit denen des vorigen Bildes verglichen.

Genauer werden die Flächenschwerpunkte paarweise verglichen und miteinander verknüpft, wenn sie die minimale euklidische Distanz zueinander aufweisen.

Neu hinzugekommene Hüllkörper erhalten einen neuen Identifikator.

Hüllkörper, die nach einer definierten Anzahl an Bildern nicht zugeordnet werden können, werden bei der Verfolgung abgemeldet, d.h. das System geht davon aus, dass die Person und/oder das Objekt nicht mehr im Überwachungsbereich sind.

Das Resultat ist, dass in jedem Bild jeder Hüllkörper einen exklusiven Identifikator zugeordnet bekommt.

Die Hüllkörper mit ihren Identifikatoren und Schwerpunkten stellen die Eingaben für den nächsten Verfahrensschritt dar.

Für eine Berechnung einer euklidischen Distanz und einer zeitlichen Distanz zwischen mindestens einem detektierten Objekt und mindestens einer detektierten Person kann pro Entität aus den vorigen Verfahrensschritten ein Objekt im Sinne einer Datenstruktur instanziiert werden.

Eine entsprechende Instanz kann jeweils die Attribute enthalten, die speichern, ob die zugehörige Entität zur Menge der Objekte oder der Personen gehört.

Das Gesamtresultat dieser Phase ist eine Zuordnung jedes registrierten Objektes zu genau einem Besitzer.

Die Zuordnung kann in dem nächsten Verfahrensschritt verarbeitet werden.

Bei einer Detektion mindestens eines von mindestens einer Person in dem Überwachungsbereich zurückgelassenen Objekts anhand der berechneten euklidischen Distanz und zeitlichen Distanz kann in jedem Verarbeitungszyklus eines Bildes für jedes Objekt überprüft werden, ob sein Besitzer ebenfalls noch in der Datenbank des Systems registriert ist.

Sollte festgestellt werden, dass dies nicht der Fall ist, dann gilt das Objekt als vergessen. Der Identifikator von dem vergessenen Objekt wird als Wert in einer Zuordnungstabelle abgespeichert, worin der Identifikator des Besitzers der zugehörige Schlüssel ist.

Noch im gleichen Verarbeitungszyklus wird auf Basis der Zuordnungstabelle eine Ausgabe generiert, welche Person welches Objekt zurückgelassen/vergessen hat.

## Patentansprüche

1. Verfahren zur Detektion von mindestens einem von einer Person unbeaufsichtigten Objekt, das in einem Überwachungsbereich zurückgelassen wird, basierend auf einem aufgenommenen Bild des Überwachungsbereichs, wobei zumindest folgende Verfahrensschritte:
• Detektion von mindestens einer Person in mindestens einem aufgenommenen Bild;
• Detektion von mindestens einem Objekt in mindestens einem aufgenommenen Bild;
• Verfolgung der Detektionen aus den zeitlich vorangegangenen Verfahrensschritten;
• Berechnung einer euklidischen Distanz und einer zeitlichen Distanz zwischen mindestens einem detektierten Objekt und mindestens einer detektierten Person, wobei mindestens ein detektiertes Objekt zu mindestens einer detektierten Person anhand der berechneten euklidischen Distanz und zeitlichen Distanz zugeordnet wird;
• Detektion mindestens eines von mindestens einer Person in dem Überwachungsbereich zurückgelassenen Objekts anhand der berechneten euklidischen Distanz und zeitlichen Distanz,
**dadurch gekennzeichnet, dass** ein Distanz-Score aus der Summe des euklidischen Distanzmaßes und des zeitlichen Distanzmaßes gebildet wird, wobei
sich ein Besitzer eines Objekts darüber ermitteln lässt, dass er im Vergleich zu allen anderen registrierten Personen im Überwachungsbereich den minimalen Distanz-Score in Bezug auf dieses Objekt aufweist.

2. Verfahren nach Anspruch 1, **dadurch gekennzeichnet, dass** bei der Berechnung der euklidischen Distanz und der zeitlichen Distanz zwischen einem detektierten Objekt und einer detektierten Person die euklidische Distanz und die zeitliche Distanz mit jeweils einem Gewichtungsfaktor verknüpft werden.

3. Verfahren nach Anspruch nach mindestens einem der vorhergehenden Ansprüche, **dadurch gekennzeichnet, dass** das Objekt auch eine Person oder ein Tier ist.

4. Vorrichtung zur Detektion von mindestens einem von einer Person vergessenen Objekt, **dadurch gekennzeichnet, dass** die Vorrichtung dazu eingerichtet ist, ein Verfahren nach mindestens einem der Ansprüche 1 bis 3 auszuführen.

## Claims

1. Method for detecting at least one object left unsupervised by a person in a surveillance area, based on an image captured of the surveillance area, with at least the following process steps:
• Detection of at least one person in at least one captured image;
• Detection of at least one object in at least one captured image;
• Tracking the detections from the temporally preceding process steps;
• Calculation of a Euclidean distance and a temporal distance between at least one detected object and at least one detected person, with at least one detected object being assigned to at least one detected person on the basis of the calculated Euclidean distance and temporal distance;
• Detection of at least one object left behind by at least one person in the surveillance area based on the calculated Euclidean distance and temporal distance,
**characterized in that** a distance score is formed from the sum of the Euclidean distance measure and the temporal distance measure, whereby an owner of an object can be determined by him having the minimal distance score in relation to this object compared to all other registered persons in the surveillance area.

2. Method according to claim 1, **characterized in that** when calculating the Euclidean distance and the temporal distance between a detected object and a detected person, the Euclidean distance and the temporal distance are linked with a weighting factor each.

3. Method according to at least one of the preceding claims, **characterized in that** the object can also be a person or an animal.

4. Device for detecting at least one object left unsupervised by a person, **characterized in that** the device is set up to carry out a method according to at least one of claims 1 to 3.

## Revendications

1. Procédé de détection d'au moins un objet laissé sans surveillance par une personne dans une zone de surveillance, basée sur une image capturée de la zone de surveillance, avec au moins les étapes suivantes :
• Détection d'au moins une personne dans au moins une image capturée;
• Détection d'au moins un objet dans au moins une image capturée;
• Suivi des détections à partir des étapes du processus précédant dans le temps;
• Calcul d'une distance euclidienne et d'une distance temporelle entre au moins un objet détecté et au moins une personne détectée, au moins un objet détecté étant attribué à au moins une personne détectée sur la base de la distance euclidienne calculée et de la distance temporelle;
• Détection d'au moins un objet laissé par au moins une personne dans la zone de surveillance sur la base de la distance euclidienne calculée et de la distance temporelle,
**caractérisé en ce qu'**un score de distance est formé à partir de la somme de la mesure de la distance euclidienne et de la mesure de la distance temporelle, un propriétaire d'un objet pouvant être déterminé en ayant le score de distance minimal par rapport à cet objet comparé à toutes les autres personnes enregistrées dans la zone de surveillance.

2. Procédé selon la revendication 1, **caractérisé en ce que** lors du calcul de la distance euclidienne et de la distance temporelle entre un objet détecté et une personne détectée, la distance euclidienne et la distance temporelle sont associées à un facteur de pondération respectif.

3. Procédé selon au moins l'une des revendications précédentes, **caractérisé en ce que** l'objet peut également être une personne ou un animal.

4. Appareil de détection d'au moins un objet oublié par une personne, **caractérisé en ce que** le dispositif est conçu pour effectuer une méthode selon au moins l'une des revendications 1 à 3.
